# EUROPEAN PATENT APPLICATION

(11) **EP 2 153 756 A1**
(43) Date of publication of application: **17.02.2010**
(21) Application number: 09014546.7
(22) Date of filing: 31.03.2008
(51) Int. Cl.: A47J 27/21, F16K 31/26, A47J 36/16

(54) **Improvements in liquid heating vessels**

(30) Priority: 12.04.2007 GB 0707083; 13.07.2007 GB 0713669
(62) Divisional of application: 08251225.2
(71) Applicant: STRIX LIMITED, Ronaldsway, Isle of Man IM9 2RG (GB)
(72) Inventor: Garvey, Vincent Joseph, Colby Isle of Man IM9 4BF (GB)
(74) Representative: Samuels, Adrian James

(57) **Abstract**

An insert (14) for a liquid receiving container. The insert comprises a reservoir, means (42) for allowing egress of liquid from the reservoir under gravity and a plurality of legs. The insert is free standing on a flat surface.

## Description

This invention relates to liquid heating vessels, particularly water boiling vessels such as kettles and jugs (referred to hereinafter collectively as "kettles").

The Applicant has recognised that it is time consuming and often inconvenient to bring a kettle to the tap to fill it. For example if the kettle is filled by the spout, there is a tendency for splashing to occur since the size and design of spouts is not usually ideal for this. In particular kettle spouts are normally fitted with baffles which allow a certain build-up of steam pressure inside the kettle when it boils which is necessary for the steam switch to work. For the same reason kettle lids tend to be tight-fitting and are therefore difficult to open. Furthermore when the kettle is held under a tap, one hand must be used to hold the kettle, and one to operate the tap. This makes it physically difficult to read the level gauge and anyway as the kettle will usually be held at an angle while filling, the indicated volume will not be accurate.

For the reasons set out above there is a natural tendency amongst users to fill a kettle to its maximum capacity, normally 1.7 litres, even if only a single cupful is required - a volume of about 250ml, thereby consuming over six times as much electrical energy than necessary. Whilst there is increasing awareness among consumers that such practices are wasteful of energy, it is still common in order to avoid the more frequent visits to the tap that would be required if smaller amounts were boiled each time. This reluctance to fill kettles with lesser amounts is compounded by the difficulty discussed above in accurately assessing the amount of water that has been put into the kettle which then necessitates extra being added to ensure that there will be sufficient..

It has been proposed in EP-A-1289359 to provide a kettle which incorporates a reservoir and a user-operated pump arrangement for pumping water from the reservoir into a heating chamber. Whilst this has the potential to allow only the correct amount of water to be boiled whilst reducing the number of trips to the tap required, it brings its own disadvantages. For example the inconvenience to the user of requiring a pumping or pressing operation by itself limits the likely consumer acceptability. Moreover the accuracy of the volume of water dispensed to be heated is variable as it is user dependent, and thus difficult to control repeatedly. Additional effort is required to dispense the correct amount. There is therefore a probability that full use will not be made of the feature. Indeed it is questionable whether the proposal as a whole represents any practical benefit over simply filling a conventional kettle from the tap.

The Applicant has realised that a key to encouraging more efficient use of energy in heating liquids, especially water for beverages, is to make it as convenient as possible for a user to heat/boil smaller amounts of liquid and thus when viewed from a first aspect the present invention provides a water heating vessel comprising an upper reservoir for receiving water, a heating chamber below the reservoir and a dispense mechanism arranged to dispense water automatically from the reservoir into the heating chamber until a predetermined level in the chamber is reached.

Thus in accordance with the invention the required amount of water is dispensed automatically into the heating chamber. Although the dispense mechanism could be arranged to require initial actuation by a user, it is preferred that it is fully automatic - i.e. it operates to replenish water in the heating chamber whenever it falls below the predetermined level. This therefore means that either very little or no action at all (apart from switching on the heater) is required by a user in order to heat a fixed amount of water, but at the same time the user is not required to make frequent trips to the tap.

The predetermined level could be fixed for a given vessel. For example an appliance might be designed and marketed as a 'one cup' kettle. Preferably however adjustment means are provided for varying the predetermined level. For example such means might comprise a knob or lever with which the predetermined level, and therefore the volume of water heated in each cycle, is varied. The adjustment means could be continuously variable or have discrete stops as required. It could be uncalibrated or calibrated e.g. by number of cups, actual volume or an arbitrary scale.

The dispense mechanism could employ any convenient means for determining when the predetermined level in the heating chamber has been reached. For example optical or electronic means could be used. Preferably however a float is used to indicate the level of water in the heating chamber. The height of the float could be determined e.g. electronically but preferably it is mechanically connected to a valve. Preferably the float is provided on a pivoting arm connected to the valve. Thus in accordance with such arrangements while the water level in the heating chamber is below the predetermined level the valve is opened to allow water to flow out from the reservoir into the heating chamber; when the predetermined level is reached, the valve is closed.

Where the float is provided on an arm this is preferably pivoted from the rear (i.e. the side of the vessel away from the spout) and extends forwardly towards the spout. This arrangement ensures that as the vessel is tipped to pour out heated water, the water tends to move the float up and therefore prevent cold water leaking from the reservoir and cooling the water that has been heated.

Where, as is preferred, means are provided for adjusting the predetermined level of water to which the heating chamber is filled, these could take many different forms. For example a float could be moved along a lever arm or altered in buoyancy. In preferred embodiments a pivot point for the float arm is vertically translatable in order to adjust the predetermined level, e.g. the level at which the valve is closed. The float arm is preferably pivoted from a substantially vertical rod which can be translated longitudinally e.g. by a stepped surface over which the end of the rod is hooked, telescopic means, or, preferably, threaded means.

The float could take any convenient form - e.g. a sealed balloon or indeed simply an arm of sufficiently low-density material. In some preferred embodiments the float has a concave outer surface facing the water at least when the water is at the predetermined level. With such a feature a downwardly open chamber is formed which in use is filled partly with water and partly with trapped air. The Applicant has realised that the effectiveness of a float can be partly reduced as water is brought to boiling since turbulence in the water causes the float to sink. However the downwardly open chamber resulting from the concavity referred to above has been found to be advantageous in at least partially counteracting this tendency since as the water boils, steam displaces some of the water in the chamber, so increasing the buoyancy of the float. In preferred embodiments the downwardly open chamber is sub-divided into a plurality of sub-chambers which could take the form of vertical channels open at their lower ends. Such arrangements have been found to reduce the displacement of air by water when the lower chamber is not square on to the surface of the water.

A further potential problem identified by the Applicant with a float valve system is that as the level in the chamber starts to approach the predetermined level, the valve begins to close, reducing the flow rate into the chamber so that it ends up taking a disproportionately long time to reach the predetermined level, potentially longer than the complete boiling time of the water. The Applicant has devised a solution to this problem. In preferred embodiments of the invention comprising a float valve dispense mechanism, the dispense mechanism is arranged to direct at least some water passing through the valve onto the top of the float mechanism (either the float itself or a part connected to it). This has the effect of depressing the float and therefore accelerating the flow rate through the valve. Such an effect could be achieved simply through the momentum of the water passing out of the valve. Preferably however the float mechanism is configured so that water drains off it at a slower rate than it flows onto it when the valve is fully open. This enhances the effect until the valve is very nearly shut (and so the flow rate very low), at which time the water on top of the valve mechanism will empty of water, the depressive effect thereof will be removed and so the float will rise rapidly to shut the valve off completely. The net effect of this arrangement is a reduction in the time take to fill the chamber coupled with a rapid cessation of flow.

In preferred such embodiments the water is directed onto the top of the float itself. Preferably a small reservoir (compared to the volume of the float) is provided on top of the float with a small aperture or gap allowing the water to drain away again. The reservoir could be open but in at least one preferred embodiment it comprises a covered chamber.

The Applicant has realised that there is a further benefit to temporarily retaining water from the reservoir on the float mechanism before it mixes with the bulk water in the heating chamber. After heating, the vessel is picked up by a user ready for pouring. This inevitably results in some disturbance in the water level in the chamber and so leakage of water from the reservoir, even where the float arm is favourably pivoted from the rear. However the float reservoir arrangement described above mitigates the possible disadvantageous cooling effect of this by letting the cooler water drain into the main water only slowly. Since the problem described is effectively transient, the result is a negligible cooling effect.

Another problem potentially inherent to all pouring vessels which have some form of upper reservoir is that of preventing leakage of water from the reservoir when water from the lower chamber is poured out. In EP-A-1289359 a large seal is provided around the lid. The seal must be large, so that a sufficiently large opening is provided to allow filling from a tap. This has disadvantages of both cost and reliability. In accordance with preferred embodiments of the present invention the vessel comprises a spout at the upper front end of the vessel for pouring water from the water chamber, and a water inlet aperture at the upper end of the vessel for admitting water into the upper reservoir wherein said inlet aperture is sufficiently spaced behind the spout that water in the upper reservoir cannot escape through it when the vessel is tipped just sufficiently to empty the heating chamber. This is beneficial as it means that no large seal is required around a lid which must be opened to fill the reservoir; the reservoir can simply be filled through the inlet aperture with leaking being prevented by the top of the upper reservoir during pouring out. The upper front part of the vessel could be permanently sealed or semi-permanently sealed, e.g. to allow disassembly for cleaning.

In the embodiments set out above the inlet aperture could be permanently open. Although this has benefits in terms of avoiding the need for an opening lid, which is not only convenient to users but which reduces production cost, it brings with it the problem of ingress of particles into the water from the environment. In order to alleviate this problem, at least some preferred embodiments of the invention comprise a water deflecting surface arranged so that the water inlet aperture extends at least partly around the lowest contour of the deflecting surface such that water falling onto the surface drains into said inlet aperture. The deflecting surface could be concave or preferably convex, e.g. domed. The deflecting surface preferably extends under or over the surrounding body surface of the vessel so as to provide a shelter over the inlet aperture and thereby minimise the ingress of debris.

This is novel and inventive in its own right and thus when viewed from a further aspect the invention provides a liquid heating vessel comprising a pouring spout, a separate water inlet aperture, and a water deflecting surface arranged so that the water inlet aperture extends at least partly around the lowest contour of the deflecting surface such that water falling onto the surface drains into said inlet aperture.

When making traditional black tea, it is common to use water which has been freshly boiled. It is recognised that for certain other beverages, it is desirable to use water that has not been boiled. For coffee, a temperature of perhaps 90°C may be preferred, and for certain fine teas, a temperature of 80°C.

Appliances are available on the market which are able to heat water to temperatures other than boiling. These appliances generally rely on some sort of thermostatic device which switches off the heater when the water achieves the desired temperature. However since the element has a significant thermal mass (heat capacity) which acts as a store of thermal energy, when power to the heater is disconnected, the stored energy continues to heat the water. This is a particular problem where, as in accordance with preferred embodiments of the present invention, a relatively small volume of water is being heated. For example at a water volume of 500ml, the effect can cause overheating by 10 to 15°C. However if a user requires just one cup (250ml) then for a conventional sheathed underfloor heater elements the water will boil, even when the power is disconnected at 80°C.

In some preferred embodiments of the invention therefore the heater plate is provided with a perimeter channel for retaining water which is thermally isolated from the main volume in the heating chamber during , such that it remains substantially less heated than the bulk water. The volume of water is preferably selected so that the energy required to heat it is approximately equal to the stored energy in the heater. When pouring, it mixes with the main volume. In this manner, the impact of the stored heat in the heater is negated. This arrangement further leads to the heat retained in the heater being effectively recovered to provide useful heat, further enhancing efficiency.

Although it is known to provide a heater plate with a narrow, parallel-sided annular sump for other reasons (boil detection), this is not ideal for the purpose set out above as the parallel walls make manufacturing difficult and thus expensive. For partially thermally isolating a volume of water for counteracting thermal overshoot it is preferred to provide a perimeter channel having a sloping sidewall as this is easier to manufacture and uses less material.

A perimeter channel in accordance with the invention will tend to be of larger volume than that known as part of a boiling control. The optimum volume is dependent on the width of the mouth of the channel since this affects the degree of mixing of the water therein with the bulk volume during heating, and hence its ultimate temperature. Clearly the higher the temperature of the water in the channel at the end of heating, the greater will be the volume required to absorb the thermal energy stored in the heater etc. which is released, without temperature overshoot. For a standard sheathed heating element mounted to a stainless steel base plate and cooling from its operating temperature to 80 degrees C, the released energy will be of the order of 1.3 kiloJoules. In preferred embodiments the mouth of the channel is between 20 mm and 30 mm, preferably approximately 25 mm. The volume of the channel is preferably between 100 and 200 ml, preferably between 150 and 160 ml, preferably approximately 155 ml.

When viewed from a further aspect the invention provides a liquid heating vessel comprising a heater plate closing an opening in the base of the vessel and a channel at least partially around the perimeter of the heating plate wherein the channel has at least one sloping wall such that the mouth of the channel is wider than its base

When viewed from a yet further aspect the invention provides a liquid heating vessel comprising a heater plate closing an opening in the base of the vessel and a channel at least partially around the perimeter of the heating plate wherein the ratio of the average width of the channel to its volume is between 4 and 20 millilitres per millimetre at least one sloping wall such that the mouth of the channel is wider than its base.

The ratio is preferably between 6 and 11 millilitres per millimetre.

The channel is envisaged as having a constant cross-sectional profile and to extend all the way around the plate although neither of these is essential.

In accordance with all aspects of the invention a filter, e.g. a standard water purification cartridge, could be provided between the upper reservoir and the heating chamber.

Further in accordance with all aspects of the invention the liquid heating vessel preferably has a handle for lifting the vessel, e.g. for pouring or for taking the vessel to a tap to allow it to be filled. Preferably the vessel has a spout in the upper region thereof for pouring out water from the vessel once the water has been heated. The vessel preferably comprises a cordless power supply arrangement. This allows the user more easily to pick up the vessel for filling and pouring.

The reservoir provided in at least some aspects of the invention could be formed integrally with or permanently attached to the vessel body; but in at least some preferred embodiments it is removable - e.g. for cleaning. However a problem arises with such embodiments, and indeed other vessels which include a removable inner vessel - e.g. jugs containing a water filter. When the inner vessel is removed, it is inconvenient to place it on a working surface, because either the float mechanism, or the filter cartridge will cause the removed inner vessel to be unstable. However in accordance with some embodiments of the invention intended to overcome this problem, a plurality of legs is provided for supporting the vessel. As well as giving stability, these legs will also protect the float mechanism. The legs can be arranged so that they do not touch the heated portion of the heater, but can be arranged instead to engage with a cooler surface of the main vessel. This has the additional benefit of allowing the designer of the vessel to dispense with the need for an upper flange to support the inner vessel, greatly simplifying the design of the lid.

Such an arrangement is believed to be novel and inventive in its own right and thus when viewed from a further aspect the invention provides an insert for a liquid receiving container comprising a reservoir and means for allowing egress of liquid from the reservoir under gravity wherein the insert is free standing on a flat surface.

Certain preferred embodiments of the present invention will now be described, by way of example only, with reference to the accompanying drawings in which:
Fig. 1 is a perspective view of a liquid heating vessel in accordance with the invention;
Fig. 2 is a sectional view of the inner reservoir;
Fig. 3 is a sectional view of the main body parts of the vessel of Fig. 1;
Fig. 4 is a sectional view of the vessel with the outer body moulding removed;
Fig. 5 is a detailed sectional view of the float valve mechanism;
Fig. 6 is a detailed perspective view of the float arm;
Fig. 7 is a section through the float arm;
Fig. 8 is a sectional view through the heater; and
Fig. 9 is a perspective view of the float arm of another embodiment of the invention.

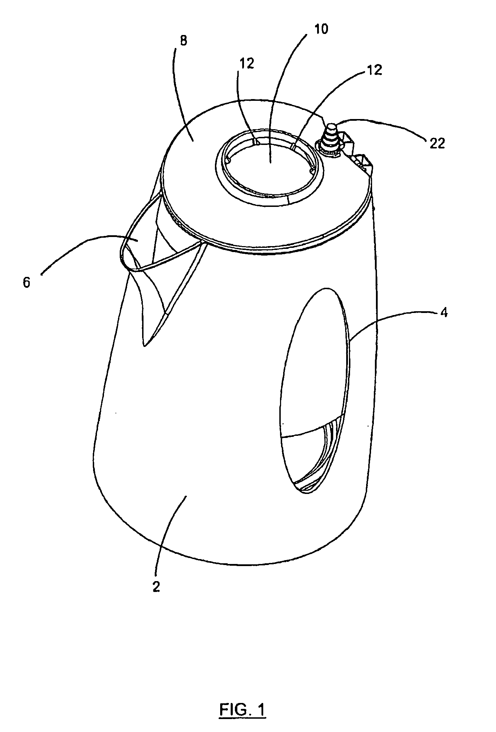

Figure 1 is a view of a liquid heating vessel in the form of a jug kettle embodying the invention. It will be noted however that the handle at the rear of the vessel has been omitted from these drawings. In common with conventional kettles, the vessel comprises a moulded plastics e.g. polypropylene body 2 in which are formed viewing windows 4 on opposing sides (only one of which is visible in the Figures). At the upper front end of the vessel is a pouring spout 6 for pouring out water from the vessel once it has been heated.

The lid of the vessel 8, however is different from conventional lids. Rather than being intended to be opened to allow the vessel to be filled, the lid 8 is fixed into position. In the centre of the lid 8 is a domed surface 10 which is supported by a series of circumferentially spaced struts 12 from the main part of the lid. The arrangement is such as to define a series of inlet apertures around the lowest edge of the domed surface 10.

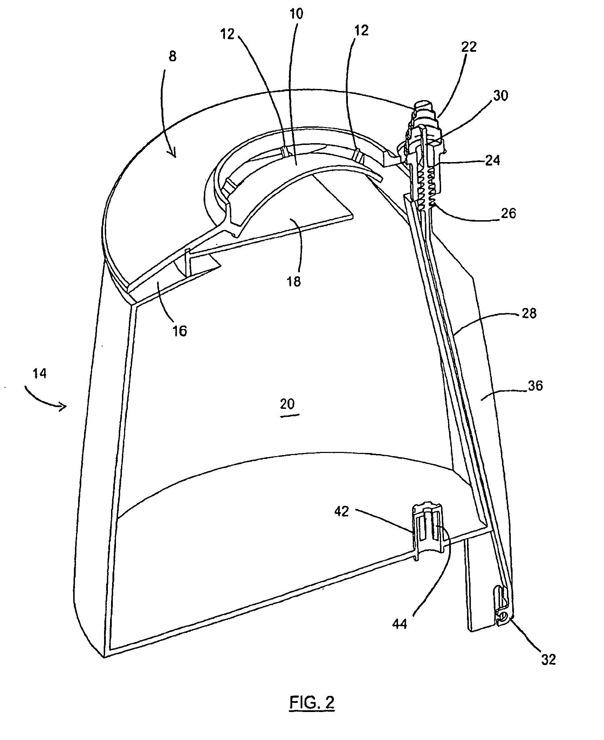

The arrangement may be seen more clearly in Figure 2 which shows an inner reservoir vessel 14 which provides the lid 8. Beneath the lid 8 is a pair of overlapping water containment surfaces 16, 18. The purpose of these will be described later. However it may be seen that the upper surface 18 is moulded to the underside of the lid 8 and extends rearwardly in a direction away from the spout approximately three quarters of the diameter of the lid. Furthermore, this surface 18 slopes downwardly towards the rear and so water running off the domed surface 10 will, depending on the direction it runs off the dome, either fall directly into the interior 20 of the reservoir vessel or onto the top of the containment surface 18 and thence into the interior 20.

The other distinctive feature which may be observed in Figure 1 is a transparent plastics indicator knob 22 which has a stepped frusto-conical shape. As may be seen in Fig. 2, the indicator knob is connected to an internally threaded sleeve 24 which engages with a threaded portion 26 of an elongate rod 28 which extends down behind the reservoir vessel 14. The upper end 30 of the rod extends upwardly from the threaded portion 26 so as to be visible in the interior of the indicator knob 22. At the bottom end of the rod 28 is a hook 32, the purpose of which will be explained later.

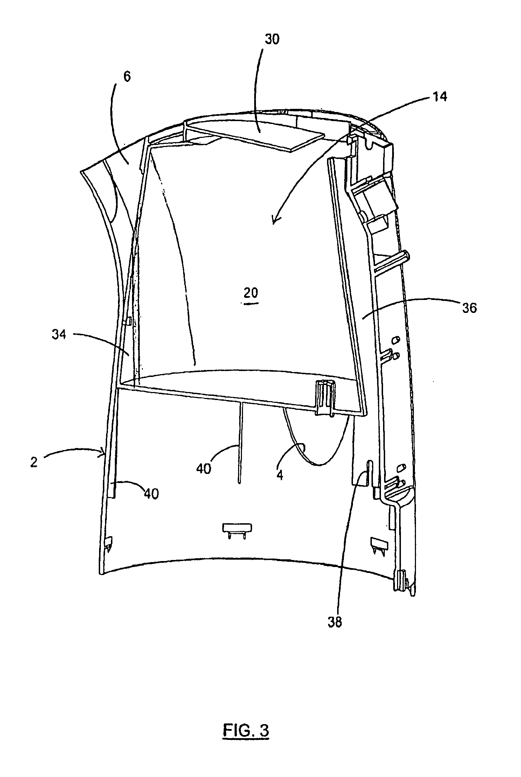

Figure 3 shows how the inner reservoir vessel 14 fits into the body 2 of the kettle. The inner reservoir vessel 14 is a tight interference fit in the upper part of the main body 2. This maximises the volume of the upper reservoir for a given overall appliance size. Alternatively a looser fit could be employed to facilitate removal for cleaning.

The circumferential contour of the reservoir vessel 14 follows that of the main body 2 except at the front and rear. At the front of the reservoir vessel 14 the contour scoops inwardly to form a channel 34 between the reservoir vessel 14 and the front of the body 2 where it merges into the spout 6. This therefore allows liquid to be poured from the chamber formed below the reservoir vessel 14 to be poured out through the spout 6. At the rear of the vessel interference between the reservoir vessel 14 and the body 2 is by means of a rearwardly extending vertical rib 36 which extends down below the reservoir 14 and defines a downwardly open slot 38 which, as may be seen in Figure 2, is aligned with the hook 32 at the end of the rod 28.

A series of wedge-profile vertical ribs 40 moulded into the inner surface of the vessel body 2 help provide support for the reservoir vessel 14 at their upper ends whilst at their lower ends they provide vertical stops for mounting a plate heater. Further details of this mounting method may be seen in EP-A-1683452.

A further feature of the reservoir vessel 14 can be seen in Figures 2 and 3. Projecting inwardly from the rear part of the base of the reservoir vessel 14 is a valve housing 42 in which a series of vertical slits 44 is defined which allow water to pass out of the reservoir interior 20 when the valve is open.

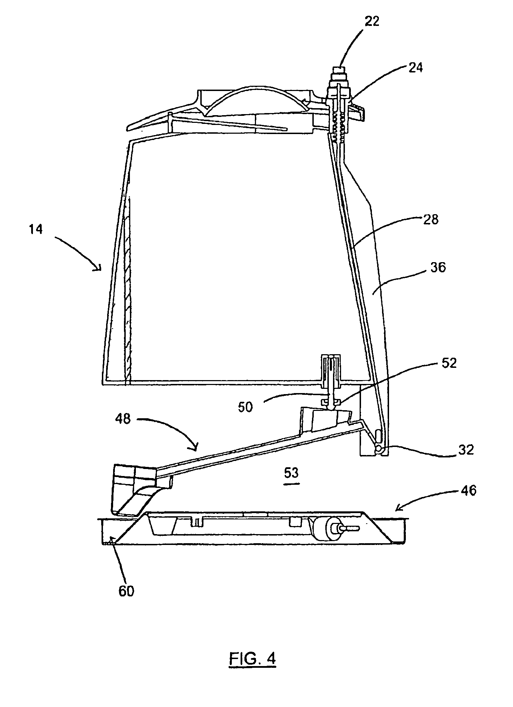

Figure 4 shows a sectional view of the vessel with the main body omitted and therefore in addition to the components shown in Figure 2, also shows the heater 46, float arm 48 and valve stem and seal 50, 52. The space between the reservoir vessel 14 and the heater 46 defines a water heating chamber 53.

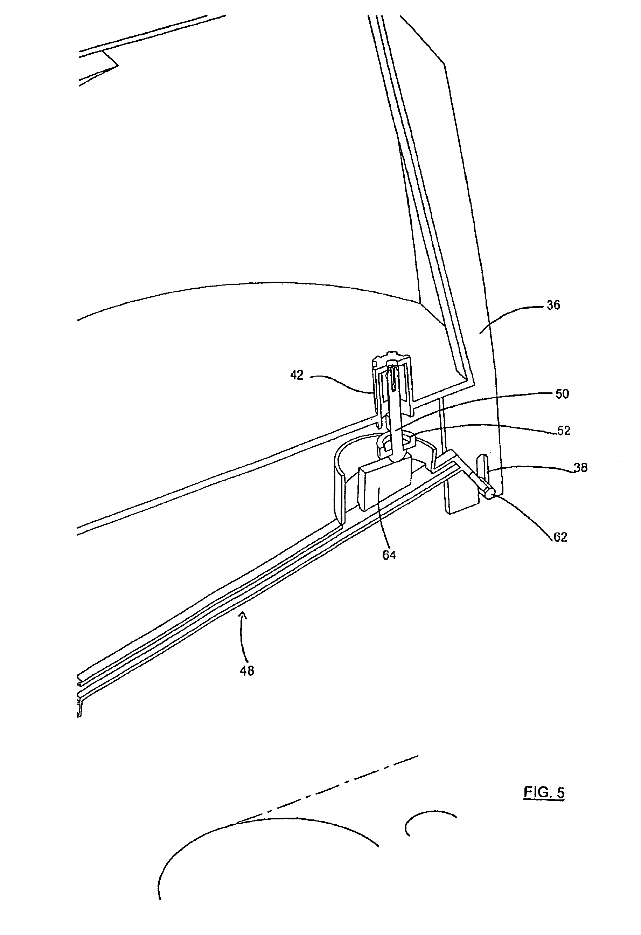

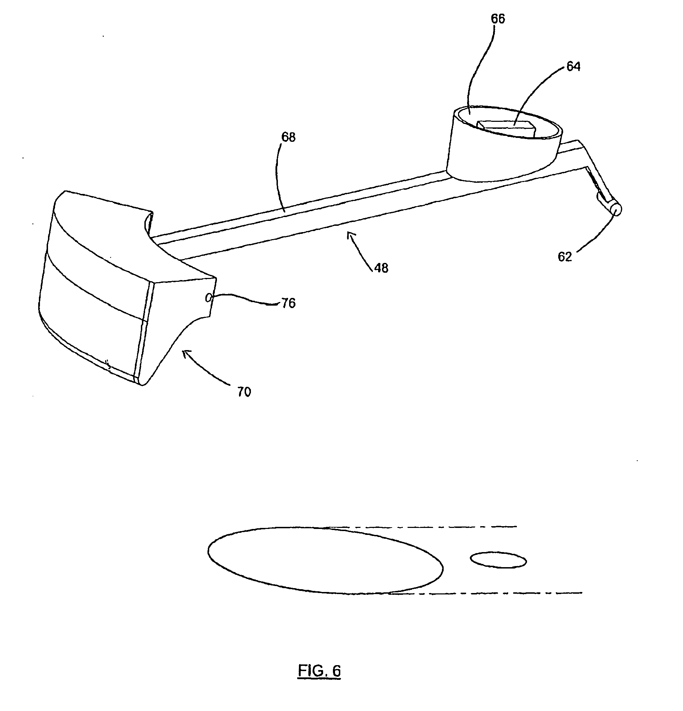

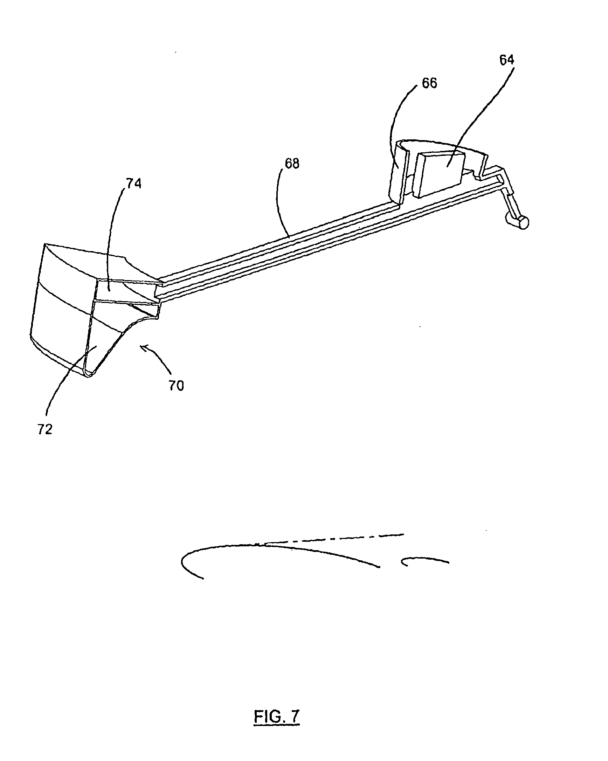

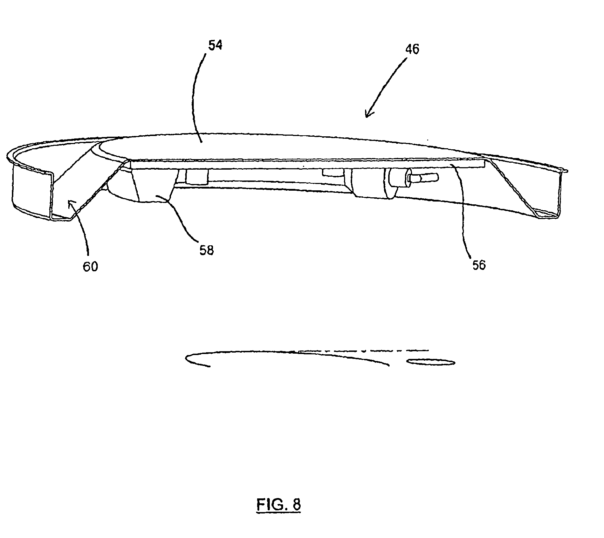

The valve arrangement is shown in greater detail in Figure 5 and the float arm is shown in greater detail in Figures 6 and 7. The heater is shown in greater detail in Figure 8. As can be seen from Figure 8, the heater 46 is a plate heater of relatively standard construction in that it comprises a thin (less than 1 mm) stainless steel plate 54 brazed to the underside of which is an aluminium diffuser plate 56 onto which is brazed a tubular sheathed resistance heating element 58. As will be readily appreciated by those skilled in the art there are many different types of heaters which could be used an the depicted arrangement is merely exemplary. For example, the diffusion plate is not essential as the element 58 could be bonded directly to the underside of the plate 54. It is not essential to use a sheathed element, a thick film heater of the type well-known to those skilled in the art could be used instead. Alternatively a plurality of elements, which could be of differing types, may be provided.

In use a thermally sensitive control unit is mounted to the underside of the heater against the diffusion plate 56. The particular embodiment shown is envisaged as employing the applicant's U 19 XT control unit which is commercially available and is described in further detail in GB-A-2372421. It therefore comprises twin snap-acting bimetallic actuators with a variable/removable spring force applied to one of them in order to alter its operating temperature and therefore permit heating of water to below boiling point.

The distinctive feature of the heater shown in Figure 8 is the peripheral water receiving channel 60 which is located radially outwardly of the central portion of the plate 54 against which the diffuser plate 56 and element 58 are mounted. The inner wall of the channel 60 slopes at approximately forty five degrees which makes forming the plate relatively easy. The mouth of the channel is approximately 25mm wide and it has a total volume of approximately 155 millilitres.

When the relatively poor thermal conductivity of stainless steel is taken into account, it will be appreciated that the water in this peripheral channel 60 will remain relatively cool while the rest of the water in the heating chamber 53 is heated. For example it will typically only be heated to around 60 degrees C whilst the rest of the water is heated to 80 degrees C. The volume of this channel below the plane of the central portion of the plate 54 is calculated so that the thermal energy required to heat the water it contains from the cooler temperature it attains during heating to the bulk temperature of the water, approximately matches the thermal energy stored in the element 58, diffuser plate 56 etc. which is released after the heater is de-energised. The energy released can be determined straightforwardly empirically. The actual thermal energy value is dependent to some extent on the desired final temperature but the calculation can be carried out at a single temperature if a fixed sub-boiling temperature is provided; or at the mid-point if a range is provided. A typical heater arrangement of the kind used in the preferred embodiment will typically release 1.3 kilojoules of energy after heating water to a temperature of 80 degrees C. This is sufficient to raise 155 millilitres of water from 60 degrees C to 80 degrees C.

Returning to Figure 4, it may be seen that the float arm 48 is pivotally mounted to the elongate rod 28 by means of a horizontal bar 62 (visible most clearly in Figure 6) which is coupled to the hook 32 at the end of the rod 28. As seen most clearly in Figure 5, the other side of the bar engages in the slot 38 at the bottom of the vertical rib 36 which extends down from the reservoir vessel 14. It may now be seen therefore that by twisting the indicator member 22 and therefore the attached threaded sleeve 24, the elongate rod 28 may be made to move up and down which has the effect of vertically translating the pivot point for the float arm 48.

Referring again to Figure 5, it may be seen that towards the proximal end of the float arm 48 a rectangular rib 64 projects upwardly to bear on the bottom end of the valve stem 50 so that the valve stem 50 follows the vertical movements of the float arm 48. Clearly the top of the pivotal travel of the float arm 48 occurs when the valve stem 50 has been moved up sufficiently that the annular seal 52 around it is pressed against the valve seat formed by the lower projecting edge of the valve housing 42 thereby closing the valve. The position depicted in Figure 5 is of course with the float arm lower than this upper stop position and accordingly the valve is open.

Additional reference should be made to Figures 6 and 7 for details of the construction of the float arm 48. In particular, it will be seen that an annular upstanding wall surrounds the rectangular valve-engaging rib 64 to form a circular cup 66. As Figure 7 shows, the stem 68 of the float arm is hollow and opens out into the interior of the aforementioned cup 66.

At the other end of the arm is the float member 70. The shape of the float member 70 in plan view is part of an annulus with an angular extent of approximately 20°. The side/tangential profile is a squat rectangle in the upper part sloping away to a rounded point in the lower part. It may be observed from Figure 4 that the lower part of this profile approximately matches that of the perimeter channel 60 of the heater plate.

Figure 7 shows that the interior of the float member 70 is divided vertically into two chambers. The lower chamber 72 is sealed and filled with air. The upper chamber 74 communicates with the hollow interior of the arm stem 68 and therefore with the interior of the open cup 66 at the proximal end of the float arm. As will be seen from Figure 6, there is a drainage hole 76 in one of the end walls of the upper chamber.

Operation of the vessel will now be described. When the vessel is empty the float arm 48 will sit in its lower position with the float member 70 resting inside the perimeter channel 60 of the heated plate 46. The valve 50, 52 will be fully open at this stage. In order to fill the vessel with water the user simply needs to place it directly underneath a tap with the dome portion 10 of the lid beneath the flow. Water striking the dome 10 will follow its contour, without significant splashing, and pass between the apertures formed between the support struts 12 into the interior of the reservoir 20. The user may continue to fill the reservoir 20 until water is visible at the bottom edge of the dome member 10.

As soon as the reservoir 20 begins to fill, water will start to pass out through the slits 44 in the valve housing 42 in the bottom of the reservoir and into the heating chamber defined between the reservoir vessel 14 and the heater plate 46. As will be appreciated from Figs. 4 and 5, water passing through the valve 50, 52 will flow into the cup 66 formed on the float arm. It will therefore run down the channel in the interior of the stem 68 of the arm and rapidly fill the upper chamber 74 of the float member 70.

Although water will leak slowly out of the upper chamber 74 via the drainage hole 76, this is much slower than the flow rate through the valve 50, 52 while it is fully open and therefore the upper float chamber 74, the arm stem 68 and the circular cup 66 will rapidly fill with water so that water passing through the valve overflows directly into the heating chamber 53 and allows it to fill quickly.

As the heating chamber 53 fills with water the float arm 58 will be pivoted upwardly, albeit that the float member 70 sits lower in the water than would otherwise have been the case because of the weight of the water contained in the upper float chamber 74. As the water level in the heating chamber 53 rises the float arm will be pushed up such that it begins to close the valve 50, 52 and so the flow of water through the valve will be reduced. Of course because the float member is weighted down as described above, this will occur at a higher water level than would otherwise have been the case.

When the flow through the valve 50, 52 reduces to such that it is slower than the rate at which water leaks out of the upper chamber drainage hole 76, the upper chamber 74 will empty. As this occurs the buoyancy of the float member 70 is suddenly increased causing the float arm to quickly rise up further and so rapidly shut off the valve completely.

The level of water in the heating chamber 53 at which the valve is closed will depend upon the height of the pivot point of the float arm 48. This can be adjusted by twisting the transparent indicator knob 22 which turns the connected threaded sleeve 24 and so screws the rod 28 up or down and therefore raises or lowers the claw 38 from which the float arm 48 is pivoted by its horizontal bar 62. Twisting the indicator knob 22 therefore alters the volume of water to which the heating chamber 53 of the vessel will automatically fill. A visual indication of the setting of the water level is given by the height of the upper end of the rod 30 which is visible through the transparent knob 22. For most users this level will not change very often.

Even if the vessel was previously empty then the heater 46 may be switched on as soon as the reservoir 20 has been filled at the tap since water begins to pass into the heating chamber 53 as soon as filling of the reservoir commences. The valve is configured such that even when the predetermined level set by the knob 22 is at its maximum, the heating chamber is filled to the required level well before the heating of the water has been completed. Of course, one of the advantages of the invention is that it is not necessary to fill the vessel every time it is required to heat water since in between fills the lower heating chamber will automatically fill with water from the reservoir 20 to the required level prior to the next use.

The water in the chamber 53 will be heated by the heater 46 in the normal way. Of course, since only a proportion of the water with which the vessel was filled is being heated, it will take less time and use less energy than if an entire kettle full of water had been heated or boiled. As previously mentioned, it is envisaged that the applicant's U19 XT control will be installed which allows the user to select whether the water is boiled or heated to a lower temperature. The water in the perimeter channel 60 of the heater is not in direct contact with the heat and is out of the main convection path that is set up within the heating chamber 53. It will therefore not be heated either conductively or convectively and so will remain relatively cool. If the water is heated to boiling then the sudden increase in turbulence at boiling will cause mixing of this cooler water with the rest of the water and so all of the water will be at boiling point before a steam switch or other boiling control switches off the heater. However, if the water is heated to a lower temperature, say 80°C, when the heater is de-energised the cooler water will tend to reduce the average temperature of the heated water when the two are mixed together during pouring. However this is countered by the thermal overshoot of the element since the volume of water in the perimeter channel 60 is calculated so that it requires approximately the same amount of energy as is stored in the heater and heater plate to raise it to the desired temperature.

In a further embodiment (not shown) the float member comprises a concave lower surface - e.g. an inverted cup such that a quantity of air is trapped. As boiling point approaches as described above, steam rising through the water will tend to displace some of the water beneath the float member 70 and therefore increase its buoyancy. This helps to counteract the tendency of the float member 70 to sink and therefore re-open the valve and let more cold water in as the water becomes turbulent as boiling approaches.

When the water has been heated to the desired temperature the user may simply pick up the vessel and pour it out via the channel 34 and spout 6. As the vessel is tipped the water obviously collects at the front of the vessel where the float member is located which tends to keep it at the top of its travel and therefore prevent opening of the valve 50, 52 during pouring and therefore the potentially undesirable leakage of cold water into the heating chamber. Furthermore, even if some drops of water do escape from the valve, these will be kept by the cup 66 on the float arm and must pass through the float arm and the upper float chamber 74 before they can mix with the heated water by which time any cooling effect will be negligible. It will thus be seen that by pivoting the float arm at the rear and therefore having the float member at the front a configuration is provided whereby self-sealing of the valve during pouring is obtained.

Although some water remains in the reservoir 20, as the vessel is tilted for pouring, this will similarly collect at the front of the reservoir. However the containment surfaces 16,18 will retain it and prevent leakage out. The upper containment surface 18 extends far enough back that even when the reservoir has the maximum equilibrium amount of water in it (the capacity of the reservoir minus the minimum volume that may be dispensed into the heating chamber) water does not breach it when the vessel is tilted far enough to empty the bottom heating chamber.

The location of the valve 42 towards the rear of the reservoir vessel also assists in preventing leakage of water into the main chamber when the vessel is tilted for pouring since the water collects away from it.

Once the heated water has been poured out the vessel will be placed back on the surface (most likely a cordless power base) and the heating chamber 53 will therefore once more automatically fill with water to the desired level. Even if on the next use the user requires a lesser amount of water than usual, the amount of energy wasted in heating the water will be significantly reduced compared to the energy wasted by heating all of the water in the vessel.

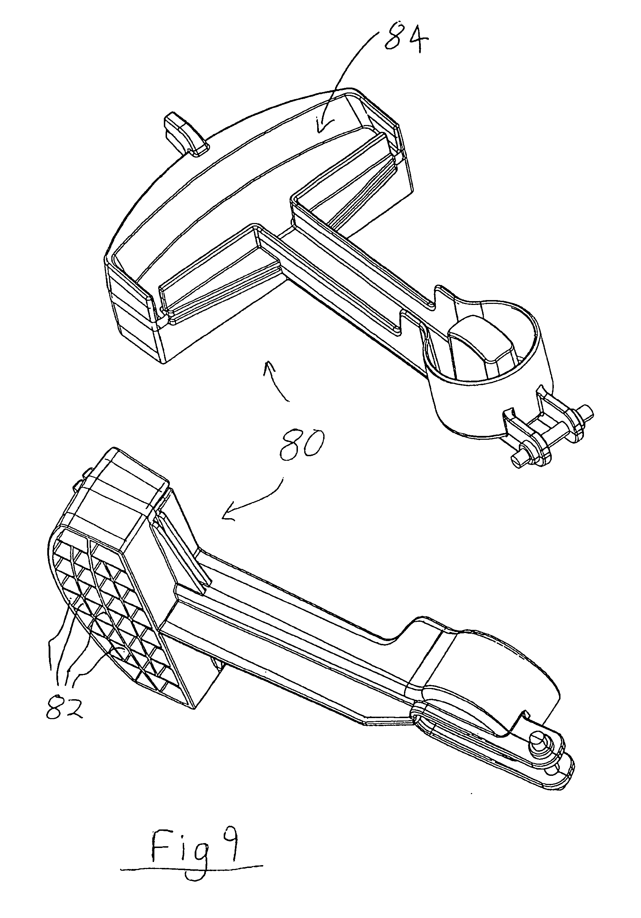

Fig. 9 depicts a different float arm which can be used with the vessel described above or indeed with any other embodiment of the invention. Unlike the float 70 depicted in Figs. 6 and 7, the float 80 in this embodiment is not closed on its underside but comprises a matrix of vertical channels 82 which are open at their lower ends. It will also be seen that the upper section 84 which receives water that has run along the arm is open rather than closed. This float 80 works in an almost identical way to the float of the previous embodiment since the channels 82 trap air when the lower face of the float comes into contact with the surface of the water, with the buoyancy being reduced by the water on the upper part of the float 84. However the float of this embodiment has the advantage over the previous one that it is easier to manufacture as it does not have the closed chambers which necessitate moulding in two parts and subsequent joining. A completely open lower chamber could be used but dividing it into channels as shown has been found to limit the displacement of air by water when the lower envelope surface of the float is at an acute angle to the water surface rather than being square on (as might be the case for example when the lower vessel has a low water level).

It will be apparent to those skilled in the art that many modifications and variations of the features shown in the described embodiment may be made within the scope of the present invention. For example, it is not necessary to employ a float arm valve, other means may be used to allow the heating chamber to fill automatically with water. Similarly, there are other ways in which the level to which the heating chamber fills may be varied; or indeed the level may be fixed.

It is not essential that the lid of the vessel is permanently closed. It could be arranged to be openable or removable - e.g. for cleaning. Indeed in some embodiments envisaged but not depicted the inner reservoir vessel is removable from the main body. For example this would permit easily heating the whole capacity of the kettle should that be required. In some such embodiments legs are provided depending from the reservoir vessel to allow it to be stored outside the kettle without damaging the float arm.

Although not shown a filter could be provided between the reservoir and the heating chamber.

## Claims

1. An insert for a liquid receiving container, said insert comprising a reservoir, means for allowing egress of liquid from the reservoir under gravity and a plurality of legs, wherein the insert is free standing on a flat surface.

2. An insert as claimed in claim 1 comprising a filter.

3. An insert as claimed in claim 1 or 2 wherein the means for allowing egress of liquid from the reservoir comprises a float mechanism.

4. An insert as claimed in claim 3 wherein the legs are arranged to protect the float mechanism when the insert is placed on the flat surface.

5. A liquid heating vessel comprising an insert as claimed in any preceding claim.

6. A liquid heating vessel as claimed in claim 5 comprising a heating chamber and a filter provided between the reservoir and the heating chamber.

7. A liquid heating vessel as claimed in claim 5 or 6 comprising a heater, wherein the legs of the insert are arranged not to touch the heated portion of the heater.
